# EUROPÄISCHE PATENTSCHRIFT

(11) **EP 0 678 692 B1**
(45) Veröffentlichungstag und Bekanntmachung des Hinweises auf die Patenterteilung: **18.08.1999**
(21) Anmeldenummer: 95103532.8
(22) Anmeldetag: 11.03.1995
(51) Int. Cl.: F16K 11/20, D01D 1/06

(54) **Ventilanordnung**
Valve arrangement
Arrangement de soupape

(30) Priorität: 26.03.1994 DE 4410567
(43) Veröffentlichungstag der Anmeldung: 25.10.1995
(73) Patentinhaber: Fisher-Rosemount GmbH & Co., 82234 Wessling (DE)
(72) Erfinder: Schmitt, Manfred, D-67159 Friedelsheim (DE)
(74) Vertreter: Klose, Hans, Dipl.-Phys.

(56) Entgegenhaltungen:
- AT-C- 218 808
- DE-C- 169 268
- DE-C- 4 027 622
- US-A- 3 746 041
- US-A- 4 749 004
- US-A- 5 269 348

## Beschreibung

Die Erfindung bezieht sich auf eine Ventilanordnung gemäß den im Oberbegriff des Patentanspruchs 1 angegebenen Merkmalen.

Aus der US-A-47 49 004 ist eine derartige Ventilanordnung bekannt, deren Ausgangskanäle in den Einmündungsbereichen zum Verteilerkanal einen kreisförmigen Querschnitt aufweisen. Die Drehachsen der Stellklappen sind zum Verteilerkanal in einem vergleichsweise großen Abstand angeordnet. Im geschlossenen Zustand der Stellklappen bildet der zwischen der jeweiligen Stellklappe und dem Verteilerkanal liegende Bereich einen Totraum, in welchem sich ein Medium festsetzen kann.

Des weiteren ist aus der US-A-52 69 348 eine Ventilanordnung bekannt, welche einen Eingangskanal und wenigstens zwei Ausgangskanäle enthält. Insbesondere gelangt diese Ventilanordnung für ein viskoses Medium, wie beispielsweise eine Polymerschmelze, zum Einsatz, um eine Verteilung auf an die Ausgangskanäle angeschlossene Extruder, Spinnvorrichtungen oder dergleichen zu ermöglichen. Die bekannte Ventilanordnung enthält ein zentrales Verteilergehäuse mit den genannten Kanälen und an das Gehäuse angebaute Ventile. Jedes Ventil enthält einen nach Art eines Kolbens axial bewegbaren Ventilkörper, welcher bezüglich des zentralen Verteilergehäuses im wesentlichen radial angeordnet ist, wobei der pilzförmig ausgebildete Ventilkörper gleichfalls in der genannten radialen Richtung hin- und herbewegbar ist. Der Antrieb zur Bewegung des Ventilkörpers muß relativ groß ausgebildet sein, da der Druck des Mediums in vollem Umfange auf den Ventilkörper einwirkt. Die Ventilanordnung weist vergleichsweise große Abmessungen auf. Es sind besondere Maßnahmen erforderlich, um Toträume, in welchen sich Teile des Medium festsetzen könnten, vermieden werden. Daher ist der Ventilkörper im Prinzip pilzförmig ausgebildet und wird sowohl in der geschlossenen als auch in der geöffneten Position des Ventils vom Medium umströmt, wodurch ein nicht unerheblicher zusätzlicher Aufwand erforderlich ist.

Ferner ist aus der DE-C-40 27 622 ein Stellklappenventil mit einem Gehäuse und einem Kanal für das strömende Medium bekannt. In dem Gehäuse ist eine Klappenscheibe mittels einer Welle drehbar gelagert, wobei die Klappenscheibe in die Welle integriert ist und mit ihrer Kontur innerhalb der Welle liegt. Die Klappenscheibe ist in einem zentralen Bereich des Kanals angeordnet, wobei dieser Bereich eine rechteckförmige, insbesondere quadratische Querschnittsfläche aufweist.

Aus dem österreichischen Patent AT-C-218 808 ist eine Ventilanordnung für Überdruckleitungen von Strömungsmitteln bekannt, wobei mehrere den Ausgangskanälen zugeordnete Stellklappen vorgesehen sind. Im Zentrum eines Verteilergehäuses ist eine gemeinsame Nockenscheibe zur Betätigung der einzelnen Stellklappen vorgesehen. Jede Stellklappe ist seitlich der Einmündung des jeweiligen Ausgangskanals in den Verteilerkanal schwenkbar gelagert und enthält einen Ansatz, mit welchem die Nockenscheibe zur Öffnung der Stellklappe in Eingriff bringbar ist. Diese Ventilanordnung enthält vor allem im Bereich der Lagerstellen der einzelnen Stellklappen Toträume, in welchen sich ein viskoses Medium, wie beispielsweise eine Polymerschmelze, festsetzen könnte. Eine separate und voneinander unabhängige Betätigung der einzelnen Stellklappen ist mittels der zentralen Nockenscheibe nicht möglich.

Schließlich ist aus dem deutschen Patent DE-C-169 268 ein Dreiwegeventil mit zwei Ausgangskanälen bekannt, welchen jeweils eine Stellklappe zugeordnet ist. Die Ausgangskanäle weisen einen kreisförmigen Querschnitt auf und die Stellklappen sind um eine gemeinsame Drehachse schwenkbar. Ein Verteilerkanal ist nicht vorhanden und zum Öffnen schwenken die Stellklappen in den Endbereich des Eingangskanals hinein.

Hiervon ausgehend liegt der Erfindung die Aufgabe zugrunde, die Ventilanordnung der genannten Art dahingehend weiterzubilden, daß das Bauvolumen reduziert wird und Toträume, in welchen das Medium sich festsetzen könnte, vermieden werden. Die Ventilanordnung soll eine funktionssichere kompakte Konstruktion aufweisen. Desweiteren soll die Ventilanordnung eine geringe Leckrate aufweisen. Ferner soll die Herstellung und Montage vereinfacht werden und darüber hinaus sollen Servicemaßnahmen problemlos durchgeführt werden können.

Die Lösung dieser Aufgabe erfolgt bei einer Ventilanordnung der genannten Art gemäß den kennzeichnenden Merkmalen des Patentanspruchs 1.

Die vorgeschlagene Ventilanordnung zeichnet sich durch eine kompakte Bauweise und eine funktionssichere Konstruktion aus. Das gemeinsame Verteilergehäuse enthält nicht nur die genannten Kanäle, sondern es enthält gleichzeitig die Ventile der wenigstens zwei Ausgangskanäle. Die Ventile sind in das Verteilergehäuse integriert, welches die Bohrungen für die Ventilklappenscheibe enthält. Auch die Klappenscheibe sowie der zugeordnete zentrale Bereich des Kanals befinden sich in dem gemeinsamen Verteilergehäuse. Die Ausgangskanäle weisen im Bereich ihrer Einmündung in den gemeinsamen Verteilerkanal einen rechteckförmigen, bevorzugt quadratischen, Querschnitt auf. Die Drehachsen der Stellklappen sind derart angeordnet, daß die genannten Stellklappen teilweise im Verteilerkanal und teilweise im jeweiligen Ausgangskanal liegen. Aufgrund dieser Ausgestaltung werden Toträume vermieden, in welchen sich das strömende Medium festsetzen könnte. In der geschlossenen Stellung einer Stellklappe bildet deren dem Verteilerkanal zugeordnete Oberfläche eine praktisch kontinuierliche Ergänzung bzw. Verlängerung der Außenwand des Verteilerkanals. Da der Druck des Mediums allseitig auf die Klappenscheibe einwirkt, kann der Ventilantrieb erheblich kleiner dimensioniert werden, wodurch das Bauvolumen und der Materialaufwand ebenso wie die Herstellkosten reduziert werden. Das Verteilergehäuse enthält den ringförmigen Verteilerkanal, von welchem die wenigstens zwei Ausgangskanäle sternförmig nach außen herausführen.

Im Zentrum des Verteilerkanals ist in zweckmäßiger Weise ein Ablenkkörper angeordnet. Zwischen der Mündung des Eingangskanals und der Außenfläche des Ablenkkörpers ist ein Ringkanal vorhanden, durch welchen hindurch das einströmende Medium in den Verteilerkanal strömen kann. Der Ablenkkörper ist zweckmäßig gegenüber dem Eingangskanal angeordnet und der Ablenkkörper ragt vorzugsweise teilweise auch in den Eingangskanal hinein, wobei die Spitze des Ablenkkörpers im Endbereich des Eingangskanales angeordnet ist. Das durch den Eingangskanal in den Ringkanal und von diesem in den ringförmigen Verteilerkanal strömende Medium erhält im Verteilerkanal eine Strömungskomponente in Umfangsrichtung. Hierdurch wird in besonders zweckmäßiger Weise vermieden, daß Teile des einströmenden Mediums im Verteilerkanal verharren oder gar festsetzen. Aufgrund dieser Umfangsströmung im ringförmigen Verteilerkanal wird das Festsetzen von Medium auch dann vermieden, wenn nur eine einzige Stellklappe geöffnet ist. Die Ausgangskanäle verlaufen vorzugsweise nicht in radialer Richtung bezogen auf das Zentrum des Verteilerkanals nach außen, sondern die Achsen der Ausgangskanäle sind bezüglich des Zentrums versetzt. Aufgrund dieses asymmetrischen Versatzes der Ausgangskanäle wird dem durch den Eingangskanal zugeführten Medium eine Umfangskomponente erteilt und das Entstehen von Ablagerungen oder einem zu langen Verbleib des zugeführten Mediums in dem Verteilerkanal wird vermieden.

Die Klappenscheiben sind im Bereich der Mündungen der Ausgangskanäle in den zentralen Verteilerkanal angeordnet. Die jeweils durch die Mitte der Klappenscheibe verlaufende Achse liegt bezüglich des Zentrums des Verteilerkanals im wesentlichen auf dem gleichen Radius wie die Außenwand des Verteilerkanals. Die Projektion der Stellklappe in eine Ebene, welche durch die Drehachse sowie die linearen Anlageflächen verläuft, ergibt ein Rechteck, insbesondere ein Quadrat, entsprechend der Querschnittsfläche des Ausgangskanals. Der Eingangskanal ist in zweckmäßiger Weise koaxial zum Zentrum des Verteilerkanals und/oder des Verteilergehäuses angeordnet. Gegenüber der Mündung des Eingangskanals sind das Verteilergehäuse und der Verteilerkanal mittels eines Verschlußkörpers abgeschlossen. Mit dem Verschlußkörper ist ferner ein Ablenkkörper verbunden, welcher eine kegelförmige Außenkontur aufweist und zumindest an die Mündung des Verteilerkanals heranragt.

In einer besonderen Ausgestaltung des Ventils ist die Klappenscheibe derart ausgebildet, daß sie in dem zentralen Bereich, insbesondere des Ausgangskanals mit einer Anlagefläche in der Schließstellung zur Anlage gebracht wird. Die Klappenscheibe kann also in dem zentralen Bereich des Kanals nicht mehr vollständig durchgedreht werden, sondern sie ist nur um einen vorgegebenen Winkelbereich schwenkbar. Hierdurch wird im Hinblick auf unterschiedlicher Temperaturkoeffizienten einerseits des Ventilgehäuses und andererseits der Klappenscheibe eine geringe Leckage gewährleistet, ohne daß ein Festsetzen der Klappenscheibe befürchtet werden muß. Die Klappenscheibe weist eine Querschnittsfläche ähnlich einer Ellipse auf, wobei die Länge der großen Hauptachse größer ist als die Breite des zentralen Kanalbereiches. Die Anlageflächen der Klappenscheibe an den Kanalwänden sind vorzugsweise ballig ausgebildet. Ferner ist die genannte große Hauptachse größer als der Durchmesser der Welle der Klappenscheibe.

In einer besonderen Ausgestaltung ist die Welle von einer Zentrierbuchse umgeben, welche mit ihrem inneren Boden an den radial über die Außenfläche der Welle vorstehenden Seiten der Klappenscheibe anliegt. An der Seite der Klappenscheibe ist ferner eine Dichtung zwischen der Zentrierbuchse bzw. deren Boden und der Welle, wobei diese Dichtung auch teilweise an den genannten Seiten der Klappe anliegt. Die Anlagefläche der Zentrierbuchse bzw. deren Boden an der Seitenfläche der Stellklappe kann sehr präzise bearbeitet und auf die Klappenscheibe eingestellt werden, wodurch auch dort eine geringe Leckage sichergestellt ist, zumal die seitlich anliegende Dichtung einem unzulässigen Durchtritt des Mediums verhindert. Durch diese Maßnahme wird in besonders zweckmäßiger Weise eine Kompensation der unterschiedlichen Wärmedehnungen der Klappenscheibe und des Gehäuses erreicht und selbst bei vergleichsweise großen Temperaturdifferenzen wird eine geringe Leckage des Ventils gewährleistet.

Besondere Ausgestaltungen und Weiterbildungen der Erfindung sind in den Unteransprüchen sowie der nachfolgenden Beschreibung angegeben.

Die Erfindung wird nachfolgend anhand des in der Zeichnung dargestellten Ausführungsbeispiels näher erläutert. Es zeigen:
- Fig. 1: einen Schnitt durch die Ventilanordnung mit drei Ausgangskanälen,
- Fig. 2: einen Schnitt entlang Schnittlinie A gemäß Fig. 1,
- Fig. 3: eine Ansicht in Blickrichtung X gemäß Fig. 2,
- Fig. 4: vergrößert das Detail IV gemäß Fig. 1,
- Fig. 5: vergrößert das Detail V gemäß Fig. 2.

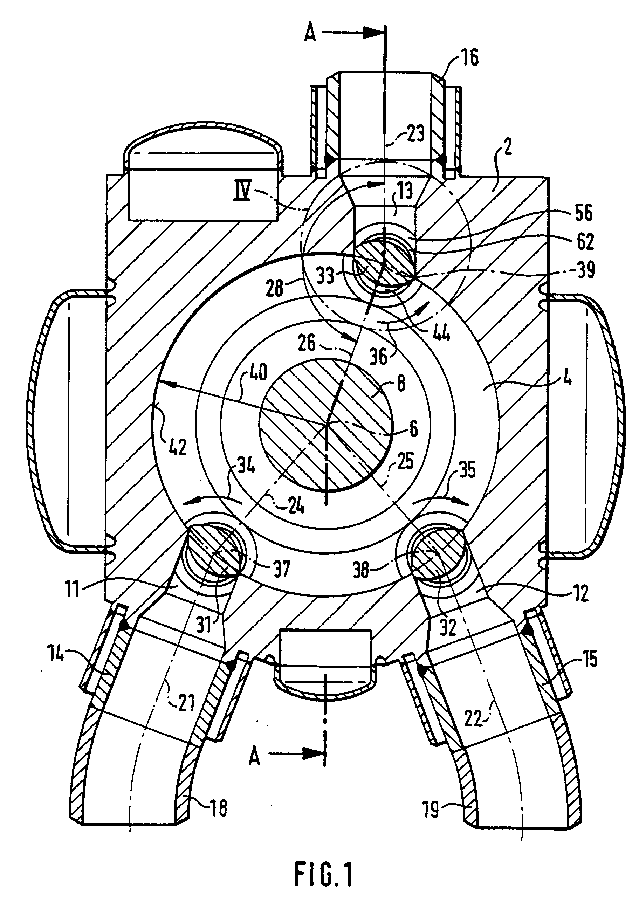

Fig. 1 zeigt einen Schnitt durch ein Verteilergehäuse 2, in welchem ein Verteilerkanal 4 angeordnet ist. Der Verteilerkanal 4 ist als eine zylindrische Ausnehmung ausgebildet mit einem im Zentrum 6 angeordneten Ablenkkörper 8. In den Verteilerkanal 4 mündet vor der Zeichenebene und orthogonal zu dieser ein Eingangskanal, dessen Achse zweckmäßig durch das Zentrum 6 verläuft. Aus dem Verteilerkanal 4 sind drei Ausgangskanäle 11, 12, 13 herausgeführt, an welche außerhalb des Gehäuses 2 Anschlußstutzen 14, 15, 16 und/oder Leitungen 18, 19 für das zu verteilende Medium angeschlossen sind. Die Ausgangskanäle 11, 12 sind asymmetrisch bezüglich des Verteilerkanals 4 angeordnet, wobei die Achsen 21, 22, 23 der genannten Ausgangskanäle nicht durch das Zentrum 6 verlaufen. Die Achsen 21, 22 verlaufen zu den jeweiligen radialen Richtungen gemäß den Linien 24, 25, 26 in einem stumpfen Winkel 28. Aufgrund dieser asymmetrischen Anordnung wird bei ganz oder teilweise geöffneten bzw. gesperrten Ausgangskanälen 11, 12, 13 dem Medium eine Umfangskomponente bezüglich des Zentrums 6 vorgegeben. Unabhängig von der jeweiligen Stellung der einzelnen, nachfolgend noch zu erläuternden Ventile der Ausgangskanäle 11, 12 und 13 wird hierdurch in besonders zweckmäßiger Weise ein Festsetzen des Mediums im Verteilerkanal 4 oder in Teilbereichen desselben vermieden.

In das Verteilergehäuse 2 sind ferner die den Ausgangskanälen 11, 12, 13 zugeordneten Ventile integriert, deren Stellklappen 31, 32, 33 in der geschlossenen Position dargestellt sind. Mit Pfeilen 34, 35, 36 ist die Richtung der Schließbewegung der Stellklappen angedeutet. Die Achsen 37, 38, 39 der Stellklappen 31, 32, 33 stehen orthogonal zur Zeichenebene und liegen zumindest näherungsweise auf dem gleichen Radius 40 wie die zumindest im Bereich der Stellklappen zylindrischen Außenwand 42 des Verteilerkanals 4. Es ist damit gewährleistet, daß in der geschlossenen Position der Stellklappen 31, 32, 33, welche sich somit teilweise in dem Verteilerkanal 4 befinden, keine Toträume zwischen der jeweiligen Stellklappe 31, 32, 33 und der Außenwand 42 vorhanden sind. Die Klappenscheibe ist Bestandteil einer Welle 44, welche von einer nachfolgend noch zu erläuternden Zentrierbuchse 56 umgeben ist. Zwischen der Zentrierbuchse 56 und der Welle ist ferner eine Wellendichtung 62 vorhanden, welche insbesondere aus Polyimid oder einem vergleichbaren Werkstoff besteht.

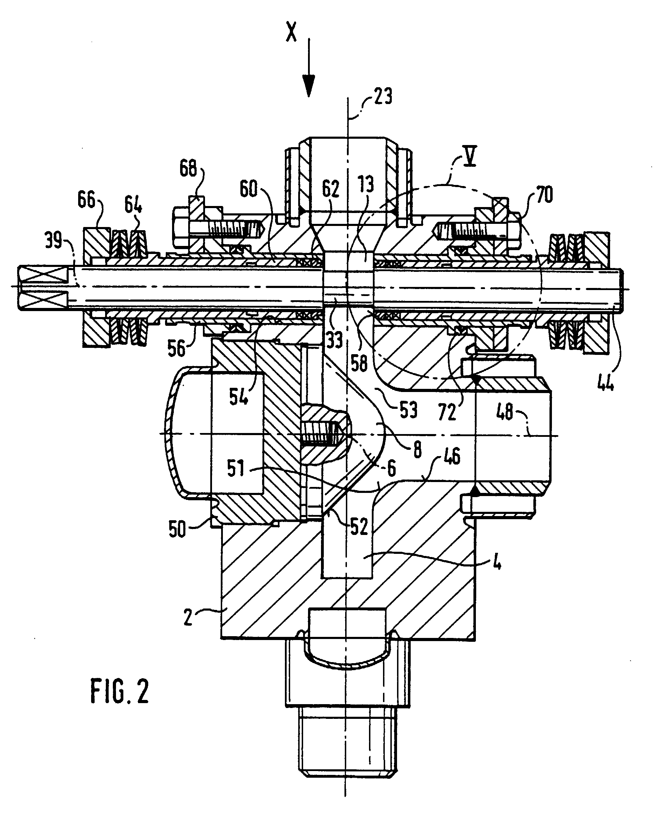

In dem Schnitt gemäß Fig. 2 ist das in das Verteilergehäuse 2 integrierte Stellklappenventil des Ausgangskanals 13 mit der Stellklappe 33 dargestellt, welche integraler Bestandteil einer Welle 44 ist. Die Drehachse 39 der Welle 44 mit der Klappenscheibe 13 verläuft parallel zum Eingangskanal 46, dessen Achse 48 durch das Zentrum 6 verläuft. Der Eingangskanal mündet in den koaxialen Verteilerkanal 4, welcher auf der anderen Seite mittels eines mit dem Verteilergehäuse 2 verbundenen Verschlußkörpers 50 verschlossen ist. Mit dem Verschlußkörper 50 ist im Bereich des Verteilerkanals 4 der Ablenkkörper 8 verbunden, welcher eine kegelförmige Außenfläche 52 aufweist, wobei seine abgerundete Spitze bis zum Eingangskanal 46 reicht. Zwischen dem Ablenkkörper 8 und einem vorzugsweise abgerundeten Übergangsbereich 51 vom Eingangskanal 46 in den ringförmigen Verteilerkanal 4 ist ein Ringkanal 53 vorhanden. Durch diesen Ringkanal 53 strömt das Medium mittelbar in den Verteilerkanal 4. Der Verschlußkörper 50 läßt sich leicht demontieren, so daß das Innere des Verteilergehäuses 2 problemlos für Servicemaßnahmen, Reinigungsarbeiten und dergleichen zugänglich ist.

Der Ausgangskanal 13 weist zumindest im Bereich der Stellklappe 33 einen rechteckförmigen, zweckmäßig quadratischen Querschnitt auf. Die nachfolgenden Erläuterungen zum Stellklappenventil mit der Stellklappe 33 gelten entsprechend für die beiden anderen Stellklappenventile der beiden anderen Ausgangskanäle. Das Verteilergehäuse 2 enthält für die Welle 44 mit der Stellklappe 33 eine Durchgangsbohrung 54, welche orthogonal zur Achse 23 des Ausgangskanals 13 verläuft und zweckmäßig im wesentlichen parallel zur Achse 48 des Eingangskanals 46 angeordnet ist. Zu beiden Seiten des Ausgangskanals 13 ist in die Durchgangsbohrung 54 jeweils eine Zentrierbuchse 56 eingesetzt, deren innerer Boden 58 bis unmittelbar an den Ausgangskanal 13 heranreicht und diesen begrenzt. Der innere Boden 58 ist bezogen auf die Innenwand der Zentrierbuchse 56 in Richtung zur Welle 44 verlängert und weist nur einen geringfügig größeren Innendurchmesser als die Welle 44 auf. Mittels einer in der Zentrierbuchse 56 in Richtung der Drehachse 39 axial verschiebbaren und die Welle 44 umgebenden inneren Buchse 60 werden Wellendichtungen 62 an den genannten inneren Boden 58 der äußeren Zentrierbuchse 56 gedrückt. Die innere Buchse 60 ist mittels Federn 64 axial vorgespannt, so daß durch die Wellendichtung 62 eine funktionssichere Abdichtung gewährleistet ist. Die Federn 64 können mittels einer Verstellplatte 66 vorgespannt werden, welche bezüglich des Verteilergehäuses 2 abgefangen ist. Mit dem Verteilergehäuse 2 ist ferner ein Ringkörper 68 mittels Schrauben 70 verbunden, wobei mittels des Ringkörpers 68 eine im Bereich der Außenfläche der Zentrierbuchse 56 angeordnete Dichtung 72 im Verteilergehäuse 2 vorgespannt und/oder festgelegt ist.

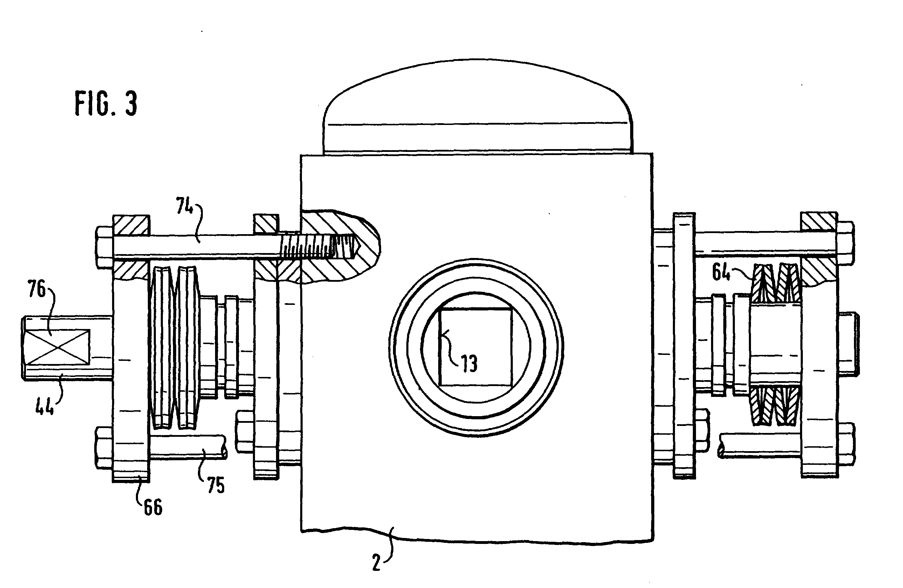

Fig. 3 zeigt teilweise die Ventilanordnung in Blickrichtung X gemäß Fig. 2, wobei der quadratische Querschnitt des Austrittskanals 13 im Bereich der Stellklappe gut zu erkennen ist. Wie bereits ausgeführt, ist die Verstellplatte 66 mittels Schrauben 74, 75 mit dem Gehäuse 2 verbunden, so daß die Federn 64 in der erforderlichen Weise vorgespannt werden können. Die Welle 44 ist an ihrem einen Ende mit einem Anschlußstück 76 versehen, welches hier insbesondere als ein Vierkant ausgebildet ist, um den Anschluß eines Stellantriebs zu ermöglichen.

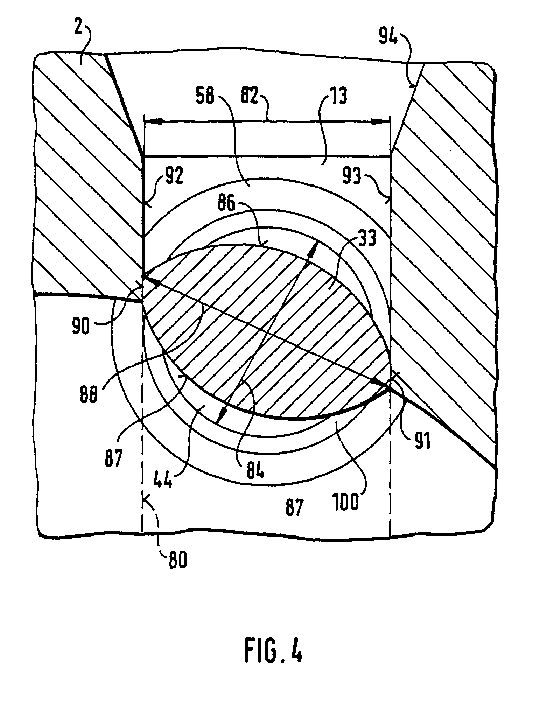

Anhand von Fig. 4 wird eine besondere Ausgestaltung der Erfindung näher erläutert. Diese Ausgestaltung ist unabhängig von der bisher beschriebenen Mehrfach-Ventilanordnung und ist ein Stellklappenventil mit einem einzigen durchgehenden Kanal 80, wie es mit strichpunktierten Linien hier angedeutet ist. In dieser besonderen Ausgestaltung ist dann der bereits erläuterte Ausgangskanal 13 Bestandteil des durchgehenden Kanals 80, welcher im Bereich der Stellklappe 33 den bereits erläuterten zentralen Bereich mit rechteckförmigem, insbesondere quadratischem Querschnitt, aufweist. In dem allgemeinen Fall ist der Kanal 80 ebenso wie der Ausgangskanal 13 Bestandteil eines Ventilgehäuses, anstelle des Verteilergehäuses 2. Der Kanal 80 weist in dem zentralen Bereich mit der Stellklappe 33 eine Breite 82 auf, welche größer ist als der Durchmesser 84 der Welle 44. Die Stellklappe 33 weist ersichtlich einen Querschnitt ähnlich einer Ellipse auf, wobei die Außenflächen 86, 87 vorzugsweise Teile von Zylinderflächen bilden. Die Stellklappe 33 besitzt eine große Hauptachse, mit Länge 88 oder einem größten Durchmesser, der größer ist als die Breite 82 des Kanals 13 bzw. 80. Wie ersichtlich, liegt die Stellklappe 33 in der dargestellten geschlossenen Position mit Anlageflächen 90, 91 an den gegenüberliegenden Innenwänden 92, 93 des Kanals 80 an. Die Anlageflächen sind in zweckmäßiger Weise geringfügig ballig ausgebildet, um insbesondere ein Festklemmen zu verhindern, wobei andererseits aber eine optimale Dichtwirkung sichergestellt ist. An dieser Stelle sei ausdrücklich festgehalten, daß der Kanal 80 nicht über seine gesamte Länge den rechteckförmigen, insbesondere quadratischen Querschnitt aufweisen muß, sondern in einem gewissen Abstand zur Stellklappe beispielsweise nach einen hier zu erkennenden etwa konischen Übergangsbereich, 94 eine zylindrische Innenkontur aufweisen kann.

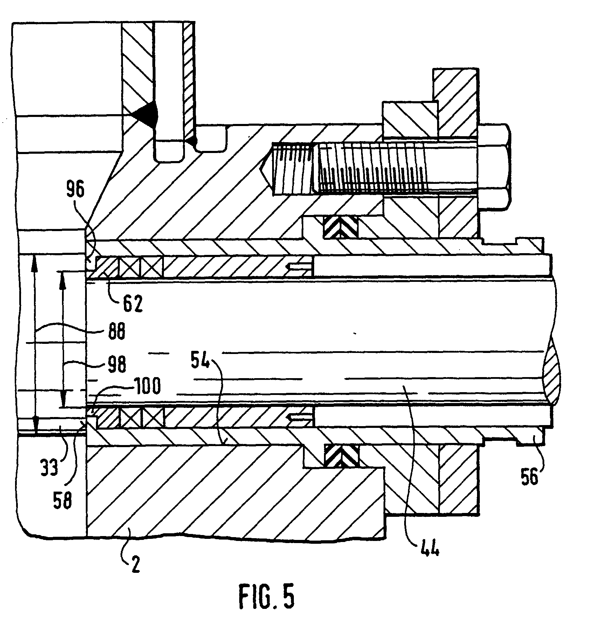

Fig. 5 zeigt vergrößert das Detail V gemäß Fig. 2, entsprechend einer Schnittebene entlang Schnittlinie A gemäß Fig. 4. Die in der Durchgangsbohrung 54 des Gehäuses angeordnete Zentrierbuchse 56 liegt mit ihrem Boden 58 teilweise an der Seitenfläche 96 der Stellklappe an. Der Boden 58 besitzt einen Innendurchmesser 98, welcher um einen vorgegebenen Betrag größer ist als der Außendurchmesser der Welle 44. Wie ersichtlich, greift die Wellendichtung 62 mit einem Teil 100 hindurch und liegt mit diesem an der Seitenfläche 96 der Stellklappe 33 an. Damit wird eine gute Abdichtung an der Seitenfläche 96 sichergestellt. Ferner gewährleistet die Zentrierbuchse 56 eine definierte axiale Ausrichtung der Stellklappe 33, wobei durch die Anlage des Bodesn 56 an der Seitenfläche 96 gleichfalls einer unzulässigen Leckage in der geschlossenen Position der Stellklappe entgegengewirkt wird. Die seitliche Anlagefläche 96 und ebenso der anliegende Boden 56 können sehr präzise gefertigt werden, so daß praktisch kein Ringspalt vorhanden ist. Desweiteren sei hervorgehoben, daß der maximale Durchmesser der Stellklappe 33 bzw. die Länge 88 der großen Hauptachse kleiner ist als der Innendurchmesser der Durchgangsbohrung 54 des Gehäuses 2.

### Bezugszeichen

- 2: Verteilergehäuse/Ventilgehäuse
- 4: Verteilerkanal
- 6: Zentrum
- 8: Ablenkkörper
- 11 - 13: Ausgangskanal
- 14 - 16: Anschlußstutzen
- 18, 19: Leitung
- 21 - 23: Achse von 11, 12, 13
- 24 - 26: radiale Linie
- 28: stumpfer Winkel
- 31 - 33: Stellklappe / Klappenscheibe
- 34 - 36: Pfeil
- 37 - 39: Drehachse
- 40: Radius von 4
- 42: Außenwand von 4
- 44: Welle
- 46: Eingangskanal
- 48: Achse von 46
- 50: Verschlußkörper
- 51: Übergangsbereich von 46 in 4
- 52: Außenfläche von 8
- 53: Ringkanal
- 54: Durchgangsbohrung
- 56: Zentrierbuchse
- 58: innerer Boden von 56
- 60: innere Buchse
- 62: Wellendichtung
- 64: Feder
- 66: Verstellplatte
- 68: Ringkörper
- 70: Schraube
- 72: Dichtung
- 74, 75: Schraube
- 76: Anschlußstück
- 80: Kanal
- 82: Breite von 13 bzw. 80
- 84: Durchmesser 44
- 86, 87: Außenfläche von 33
- 88: größter Durchmesser von 33
- 90, 91: Anlagefläche
- 92, 93: Innenwand
- 94: Übergangsbereich
- 96: Seitenfläche
- 98: Innendurchmesser von 56
- 100: Teil von 62

## Patentansprüche

1. Ventilanordnung mit einem Verteilergehäuse (2), enthaltend einen Verteilerkanal (4), in welchen ein Eingangskanal (46) mündet und aus welchem wenigstens zwei Ausgangskanäle (11, 12, 13) herausführen, und ferner enthaltend ein dem jeweiligen Ausgangskanal zugeordnetes Ventil, mittels welchem der Strömungsquerschnitt für ein durch den Eingangskanal (46) zugeführtes Medium in den jeweiligen Ausgangskanal (11, 12, 13) vorgebbar ist, wobei die in das Verteilergehäuse (2) integrierten Ventile Stellklappen (31, 32, 33) aufweisen,
dadurch gekennzeichnet, daß die Ausgangskanäle (11, 12, 13) im Bereich der Einmündung in den Verteilerkanal (4) einen rechteckförmigen, bevorzugt quadratischen, Querschnitt aufweisen,
daß die Stellklappen (31, 32, 33) in den genannten Einmündungsbereichen angeordnet sind,
und daß die Drehachsen (37, 38, 39) der Stellklappen (31, 32, 33) derart angeordnet sind, daß diese Stellklappen teilweise im Verteilerkanal (4) und teilweise im jeweiligen Ausgangskanal (31, 32, 33) liegen.

2. Ventilanordnung nach Anspruch 1, dadurch gekennzeichnet, daß der Verteilerkanal (4) zumindest im Bereich der Stellklappen (31, 32, 33) eine zu deren Drehachsen (37, 38, 39) im wesentlichen parallele Außenwand (42) aufweist, welche bevorzugt zylindrisch ausgebildet ist, wobei deren Radius (40) im wesentlichen gleich groß ist wie der Abstand der Drehachse (37, 38, 39) zum Zentrum (6) des Verteilerkanals (4).

3. Ventilanordnung nach Anspruch 1 oder 2, dadurch gekennzeichnet, daß in der geschlossenen Stellung der Stellklappen (31, 32, 33) deren dem Verteilerkanal (4) zugeordneten Oberflächen unmittelbar an die Außenwand (42) des Verteilerkanals (4) anschließen.

4. Ventilanordnung nach einem der Ansprüche 1 bis 3, dadurch gekennzeichnet, daß die Achsen (21, 22, 23) der Ausgangskanäle (11, 12, 13) in einem vorzugsweise stumpfen Winkel (28) bezüglich radialer, vom Zentrum (6) ausgehender Radien (24, 25, 26) angeordnet sind, welche die Drehachsen (37, 38, 39) schneiden.

5. Ventilanordnung nach einem der Ansprüche 1 bis 4, dadurch gekennzeichnet, daß der Eingangskanal (46) im wesentlichen orthogonal zum Verteilerkanal (4) und/oder zu einer durch diesen verlaufenden Ebene steht, in welcher wenigstens eine der Achsen (21, 22, 23) der Ausgangskanäle (11, 12, 13) liegt.

6. Ventilanordnung nach einem der Ansprüche 1 bis 5, dadurch gekennzeichnet, daß das Verteilergehäuse (2) gegenüber dem Eingangskanal (46) einen Verschlußkörper (50) oder einen Ablenkkörper (8) aufweist und/oder daß mit dem Verschlußkörper (50) der Ablenkkörper (8) verbunden ist und/oder daß der Ablenkkörper (8) zumindest teilweise in den Verteilerkanal (4) hineinragt und/oder daß der Ablenkkörper eine kegelförmige Außenfläche (52) mit einem vorzugsweise abgerundeten und auf den Eingangskanal (46) gerichteten Spitzenbereich aufweist.

7. Ventilanordnung nach einem der Ansprüche 1 bis 6, dadurch gekennzeichnet, daß die Welle (44), in welche die Stellklappe (31, 32, 33) integriert ist, mittels einer Zentrierbuchse (56) in einer Durchgangsbohrung (54) des Verteiler- und/oder Ventilgehäuses (2) angeordnet ist und/oder daß die Zentrierbuchse (56) einen inneren Boden (58) aufweist, welcher unmittelbar an den Ausgangskanal (13) anschließt und/oder diesen begrenzt.

8. Ventilanordnung nach einem der Ansprüche 1 bis 7, dadurch gekennzeichnet, daß die Welle (44) von einer inneren Buchse (60) umgeben ist, welche außerhalb des Verteiler- und/oder Ventilgehäuses (2) insbesondere mittels Federn (64), axial beaufschlagt ist und welche innerhalb des Verteiler- und/oder Ventilgehäuses (2) eine die Welle (44) umgebende Wellendichtung (62) beaufschlagt.

9. Ventilanordnung nach Anspruch 7 oder 8, dadurch gekennzeichnet, daß die Wellendichtung (62) an einem inneren Boden (58) der Zentrierbuchse (56) anliegt und/oder daß die Zentrierbuchse (56) mit ihrem Boden (58) an der Seitenfläche (96) der Stellklappe (33) anliegt.

10. Ventilanordnung nach einem der Ansprüche 1 bis 9, dadurch gekennzeichnet, daß die Stellklappe (33) in der geschlossenen Position mittels Anlageflächen (90, 91) an gegenüberliegenden Innenflächen (92, 93) des Kanals (13, 80) anliegt, wobei der größte Durchmesser (88) der Stellklappe (33) größer ist als die Breite (82) des Kanals (13, 80) zwischen den genannten Innenwänden (92, 93), und/oder daß der größte Durchmesser (88) der Stellklappe (33) größer ist als der Durchmesser (84) der Welle (44) und/oder kleiner ist als der Innendurchmesser der Durchgangsbohrung (54) des Gehäuses (2).

11. Ventilanordnung nach einem der Ansprüche 1 bis 10, dadurch gekennzeichnet, daß die Wellendichtung (62) mit einem Teil (100) an der Seitenfläche (96) der Stellklappe (33) anliegt und/oder daß der Teil (100) der Wellendichtung (62) in einem Ringspalt zwischen der Außenfläche der Welle (44) und dem inneren Boden (58) der Zentrierbuchse (56) angeordnet ist.

## Claims

1. Valve arrangement with a distributor housing (2), comprising a distributing duct (4) into which an inlet duct (46) opens and out of which at least two outlet ducts (11, 12, 13) lead, and further comprising a valve associated with the respective outlet duct and by means of which the flow cross section for a medium supplied via the inlet duct (46) to the respective outlet duct (11, 12, 13) can be defined, the valves integrated into the distributor housing (2) having regulating flaps (31, 32, 33), characterised in that the outlet ducts (11, 12, 13) have a rectangular, preferably square cross section in the region in which they open into the distributing duct (4), that the regulating flaps (31, 32, 33) are arranged in the said opening regions, and that the axes of rotation (37, 38, 39) of the regulating flaps (31, 32, 33) are arranged in such a manner that these regulating flaps are situated partly in the distributing duct (4) and partly in the respective outlet duct (31, 32, 33).

2. Valve arrangement according to claim 1, characterised in that the distributing duct (4) is provided at least in the region of the regulating flaps (31, 32, 33) with an outer wall (42) which is substantially parallel to the axes of rotation (37, 38, 39) thereof and is preferably cylindrical, its radius (40) being substantially identical to the distance between the axis of rotation (37, 38, 39) and the centre (6) of the distributing duct (4).

3. Valve arrangement according to claim 1 or claim 2, characterised in that, in the closed position of the regulating flaps (31, 32, 33), their surfaces associated with the distributing duct (4) are directly connected to the outer wall (42) of the distributing duct.

4. Valve arrangement according to one of claims 1 to 3, characterised in that the axes (21, 22, 23) of the outlet ducts (11, 12, 13) are arranged at a preferably obtuse angle (28) relative to radial radii (24, 25, 26) departing from the centre (6) and intersecting with the axes of rotation (37, 38, 39).

5. Valve arrangement according to one of claims 1 to 4, characterised in that the inlet duct (46) is substantially perpendicular to the distributing duct (4) and/or to a plane extending through the latter, in which at least one of the axes (21, 22, 23) of the outlet ducts (11, 12, 13) is situated.

6. Valve arrangement according to one of claims 1 to 5, characterised in that the distributor housing (2) has a closure body (50) or a deflector body (8) with respect to the inlet duct (46) and/or that the deflector body (8) is connected to the closure body (50) and/or that the deflector body (8) projects at least partly into the distributing duct (4) and/or that the deflector body has a conical outer surface (52) with a preferably rounded tip region directed towards the inlet duct (46).

7. Valve arrangement according to one of claims 1 to 6, characterised in that the shaft (44) into which the regulating flap (31, 32, 33) is integrated is arranged in a through bore (54) of the distributor and/or valve housing (2) by means of a centring bush (56) and/or that the centring bush (56) has an inner bottom (58) which is directly connected to the outlet duct (13) and/or delimits the latter.

8. Valve arrangement according to one of claims 1 to 7, characterised in that the shaft (44) is surrounded by an inner bush (60) which is acted upon axially outside the distributor and/or valve housing (2), in particular by means of springs (64), and which acts within the distributor and/or valve housing (2) on a shaft seal (62) surrounding the shaft (44).

9. Valve arrangement according to claim 7 or claim 8, characterised in that the shaft seal (62) bears against an inner bottom (58) of the centring bush (56) and/or that the centring bush (56) bears via its bottom (58) against the side surface (96) of the regulating flap (33).

10. Valve arrangement according to one of claims 1 to 9, characterised in that the regulating flap (33) bears in the closed position by means of bearing surfaces (90, 91) against opposing inner surfaces (92, 93) of the duct (13, 80), the largest diameter (88) of the regulating flap (33) being larger than the width (82) of the duct (13, 80) between the said inner walls (92, 93) and/or that the largest diameter (88) of the regulating flap (33) is greater than the diameter (84) of the shaft (44) and/or smaller than the internal diameter of the through bore (54) of the housing (2).

11. Valve arrangement according to one of claims 1 to 10, characterised in that the shaft seal (62) bears via one part (100) against the side surface (96) of the regulating flap (33) and/or that the part (100) of the shaft seal (62) is arranged in an annular gap between the outer surface of the shaft (44) and the inner bottom (58) of the centring bush (56).

## Revendications

1. Système de vanne avec un boîtier distributeur (2), contenant un canal distributeur (4) dans lequel débouche un canal d'admission (46) et depuis lequel partent au moins deux canaux de sortie (11, 12, 13), et contenant de plus une vanne associée au canal de sortie respectif, au moyen de laquelle la section d'écoulement d'un fluide introduit par le canal d'admission (46) dans le canal de sortie respectif (11, 12, 13) peut être déterminée, les vannes intégrées dans le boîtier distributeur (2) présentant des clapets de réglage (31, 32, 33), ***caractérisé en ce que*** les canaux de sortie (11, 12, 13) présentent une section rectangulaire, de préférence carrée, dans les zones de débouché dans le canal distributeur (4), ***en ce que*** les clapets de réglage (31, 32, 33) sont placés dans lesdites zones de débouché, et ***en ce que*** les axes de rotation (37, 38, 39) des clapets de réglage (31, 32, 33) sont agencés de telle manière que ces clapets de réglage se trouvent en partie dans le canal distributeur ( 4) et en partie dans le canal de sortie (31, 32, 33) respectif.

2. Système de vanne selon la Revendication 1, ***caractérisé en ce que*** le canal distributeur (4) présente au moins au niveau des clapets de réglage (31, 32, 33) une paroi extérieure (42) sensiblement parallèle à leurs axes de rotation (37, 38, 39), laquelle est conformée de préférence cylindrique, son rayon (40) étant sensiblement équivalent à la distance des axes de rotation (37, 38, 39) au centre (6) du canal distributeur (4).

3. Système de vanne selon la Revendication 1 ou 2, ***caractérisé en ce que,*** dans la position fermée des clapets de réglage (31, 32, 33), leurs surfaces tournées vers le canal distributeur (4) se raccordent directement à la paroi extérieure (42) du canal distributeur (4).

4. Système de vanne selon l'une quelconque des Revendications 1 à 3, ***caractérisé en ce que*** les axes (21, 22, 23) des canaux de sortie (11, 12, 13) sont agencés selon un angle (28) de préférence obtus par rapport à des rayons partant du centre (6), lesquels coupent les axes de rotation (37, 38, 39).

5. Système de vanne selon l'une quelconque des Revendications 1 à 4, ***caractérisé en ce que*** le canal d'admission (46) est sensiblement perpendiculaire au canal distributeur (4) et/ou à un plan passant par celui-ci, dans lequel se trouve au moins l'un des axes (21, 22, 23) des canaux de sortie (11, 12, 13).

6. Système de vanne selon l'une quelconque des Revendications 1 à 5, ***caractérisé en ce que*** le boîtier distributeur (2) présente en vis-à-vis du canal d'admission (46) un corps de fermeture (50) ou un corps déflecteur (8) et/ou ***en ce qu***'au corps de fermeture (50) est relié le corps déflecteur (8) et/ou ***en ce que*** le corps déflecteur (8) forme saillie au moins partiellement dans le canal distributeur (4) et/ou ***en ce que*** le corps déflecteur présente une surface extérieure conique (52) avec une zone de pointe de préférence arrondie et tournée vers le canal d'admission (46).

7. Système de vanne selon l'une quelconque des Revendications 1 à 6, ***caractérisé en ce que*** l'arbre (44) auquel est intégré le clapet de réglage (31, 32, 33) est placé au moyen d'une douille de centrage (56) dans un perçage traversant (54) du boîtier (2) distributeur et/ou de vannes et/ou ***en ce que*** la douille de centrage (56) présente un fond intérieur (58) qui se raccorde directement au canal de sortie (13) et/ou délimite celui-ci.

8. Système de vanne selon l'une quelconque des Revendications 1 à 7, ***caractérisé en ce que*** l'arbre (44) est entouré d'une douille intérieure (60) qui est chargée de manière axiale en dehors du boîtier (2) distributeur et/ou de vannes, en particulier au moyen de ressorts (64), et qui charge dans le boîtier (2) distributeur et/ou de vannes un joint (62) d'arbre entourant l'arbre (44).

9. Système de vanne selon la Revendication 7 ou 8, ***caractérisé en ce que*** le joint (62) d'arbre s'appuie sur un fond intérieur (58) de la douille de centrage (56) et/ou ***en ce que*** la douille de centrage (56) s'appuie avec son fond (58) contre la surface latérale (96) du clapet de réglage (33).

10. Système de vanne selon l'une quelconque des Revendications 1 à 9, ***caractérisé en ce que*** le clapet de réglage (33) s'appuie dans la position fermée, au moyen de surfaces d'appui (90, 91), contre des surfaces intérieures opposées (92, 93) du canal (13, 80), le plus grand diamètre (88) du clapet de réglage (33) étant supérieur à la largeur (82) du canal (13, 80) entre lesdites parois intérieures (92, 93) et/ou ***en ce que*** le plus grand diamètre (88) du clapet de réglage (33) est supérieur au diamètre (84) de l'arbre (44) et/ou est inférieur au diamètre intérieur du perçage traversant (54) du boîtier (2).

11. Système de vanne selon l'une quelconque des Revendications 1 à 10, ***caractérisé en ce que*** le joint d'arbre (62) s'appuie avec une partie (100) contre la surface latérale (96) du clapet de réglage (33) et/ou ***en ce que*** la partie (100) du joint d'arbre (62) est placée dans une fente annulaire entre la surface extérieure de l'arbre (44) et le fond intérieur (58) de la douille de centrage (56).
